# EUROPEAN PATENT APPLICATION

(11) **EP 4 671 018 A1**
(43) Date of publication of application: **31.12.2025**
(21) Application number: 24791683.6
(22) Date of filing: 19.01.2024
(51) Int. Cl.: B60K 1/04, B60N 2/00, B62D 25/20

(54) **SEAT SUPPORT MEMBER MOUNTING STRUCTURE, BATTERY PACK AND VEHICLE**

(30) Priority: 17.04.2023 CN 202320955100 U
(71) Applicant: BYD Company Limited, Shenzhen, Guangdong 518118 (CN)
(72) Inventor: HU, Shichao, Shenzhen, Guangdong 518118 (CN); ZHU, Liequn, Shenzhen, Guangdong 518118 (CN); ZHANG, Yaosheng, Shenzhen, Guangdong 518118 (CN); LI, Ziqian, Shenzhen, Guangdong 518118 (CN); LAI, Qing, Shenzhen, Guangdong 518118 (CN)
(74) Representative: Aldridge, Henry Alexander
(86) International application number: PCT/CN2024/073157
(87) International publication number: WO 2024/217095

(57) **Abstract**

This application discloses a seat support member mounting structure, a battery pack, and a vehicle. The seat support member mounting structure includes a seat support member and a battery pack housing. The seat support member is connected to the battery pack housing by using a structural adhesive. According to the solutions of this application, the seat support member does not need to be welded to a vehicle body, and safety of the battery pack during collision can be improved. Therefore, the seat support member is particularly suitable for the vehicle body manufactured by using a composite material.

## Description

### CROSS-REFERENCE TO RELATED APPLICATIONS

This application claims priority to Chinese Patent Application No. 202320955100.4, filed by BYD Company Ltd. on April 17, 2023 and entitled "SEAT SUPPORT MEMBER MOUNTING STRUCTURE, BATTERY PACK, AND VEHICLE", which is incorporated herein by reference in its entirety.

### TECHNICAL FIELD

This application relates to the field of vehicle technologies, and specifically to a seat support member mounting structure, a battery pack, and a vehicle.

### BACKGROUND

In the conventional technology, a seat support member of a vehicle is welded to a vehicle body, and a battery pack is mounted below the vehicle body. However, vehicle bodies of many existing vehicle models use composite materials such as carbon fiber. Consequently, seat support members cannot be welded to the vehicle bodies.

### SUMMARY

This application is intended to resolve at least one of technical problems in a related technology to some extent.

Therefore, this application provides a seat support member mounting structure.

The seat support member mounting structure includes a seat support member and a battery pack housing. The seat support member is connected to the battery pack housing by using a structural adhesive.

In this application, the seat support member is connected to the battery pack housing by using a structural adhesive. In this way, the seat support member does not need to be welded to a vehicle body. Therefore, the seat support member is particularly suitable for a vehicle with a vehicle body manufactured by using a composite material, and the seat support member can further enhance structural strength of a battery pack.

This application further provides a battery pack including the seat support member mounting structure.

This application further provides a vehicle including the battery pack.

Some of additional aspects and advantages of this application are provided in the following descriptions, and some of the additional aspects and the advantages become apparent from the following descriptions or are learned from practice of this application.

### BRIEF DESCRIPTION OF DRAWINGS

FIG. 1 is an exploded view of a seat support member mounting structure according to an embodiment of this application;
FIG. 2 is an exploded view of a structure of a battery pack according to an embodiment of this application;
FIG. 3 is a partially enlarged view of a cold plate according to an embodiment of this application;
FIG. 4 is a three-dimensional diagram of a battery pack according to an embodiment of this application;

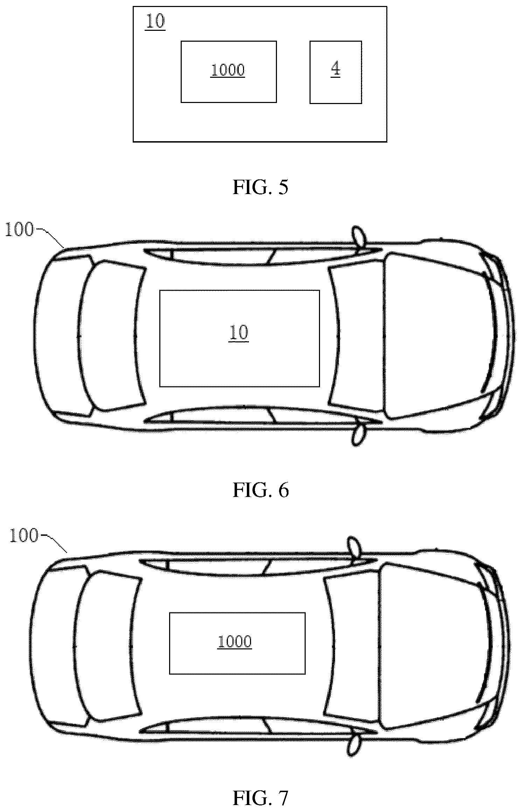

FIG. 5 is a schematic diagram of a battery pack according to an embodiment of this application;
FIG. 6 is a schematic diagram 1 of a vehicle according to an embodiment of this application; and
FIG. 7 is a schematic diagram 2 of a vehicle according to an embodiment of this application.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The embodiments described below with reference to the accompanying drawings are examples and aim to explain this application and cannot be construed as limiting this application.

In the following descriptions, "above" means a direction pointing from a vehicle bottom to a vehicle top in a height direction of a vehicle 100, "transverse" means a width direction of the vehicle 100, and "longitudinal" means a length direction of the vehicle 100.

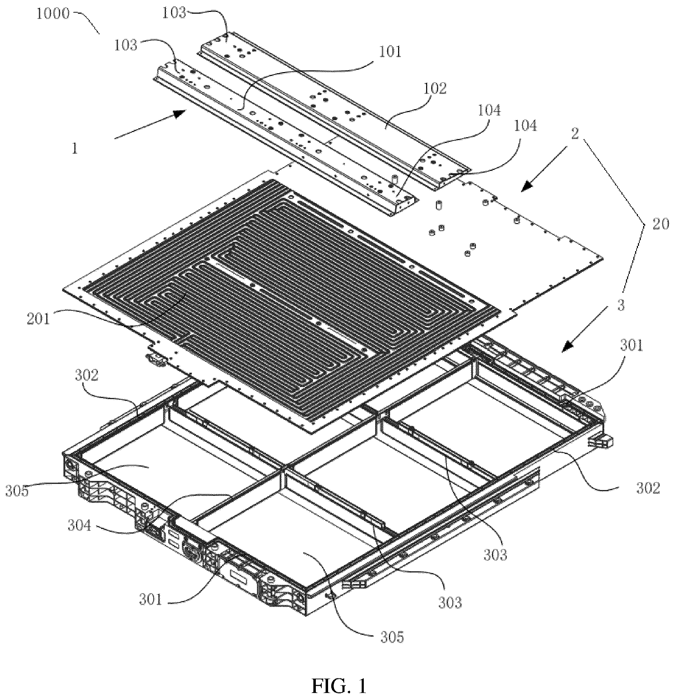

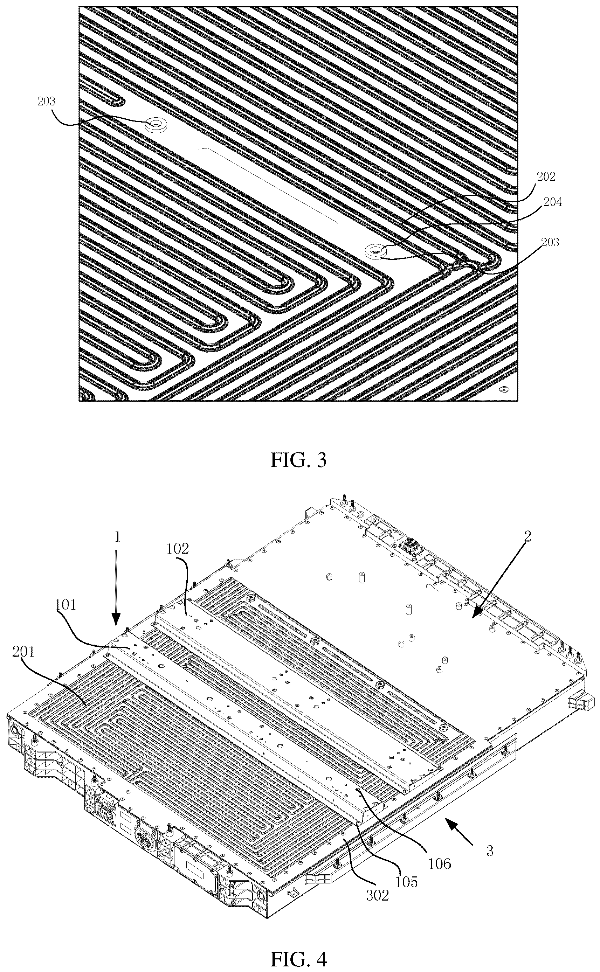

Refer to FIG. 1 and FIG. 3. According to an embodiment of this application, a seat support member mounting structure is provided, including a seat support member 1 and a battery pack housing. The seat support member 1 is connected to the battery pack housing by using a structural adhesive. The seat support member 1 is configured to mount a seat, to support the seat in a passenger compartment. Usually, compression strength of the structural adhesive > 65 MPa, steel-steel normal tensile adhesive strength > 30 MPa, and anti-shear strength > 18 MPa. For example, the structural adhesive is a silicone structural adhesive commonly available in the market. Because the seat support member 1 is connected to the battery pack housing by using a structural adhesive, the seat support member does not need to be welded to a vehicle body, which is beneficial for a vehicle body using a composite material, for example, a carbon fiber material. This is because the composite material such as the carbon fiber material is not suitable for a welding process. In addition, stress between the seat support member 1 and the battery pack housing can be further relieved after the seat support member 1 is connected to the battery pack housing by using a structural adhesive. The seat support member 1 is tightly combined with the battery pack housing, to improve strength of a battery pack 10 for withstanding collision, thereby reducing intrusion into a battery during collision and ensuring safety of the battery pack 10.

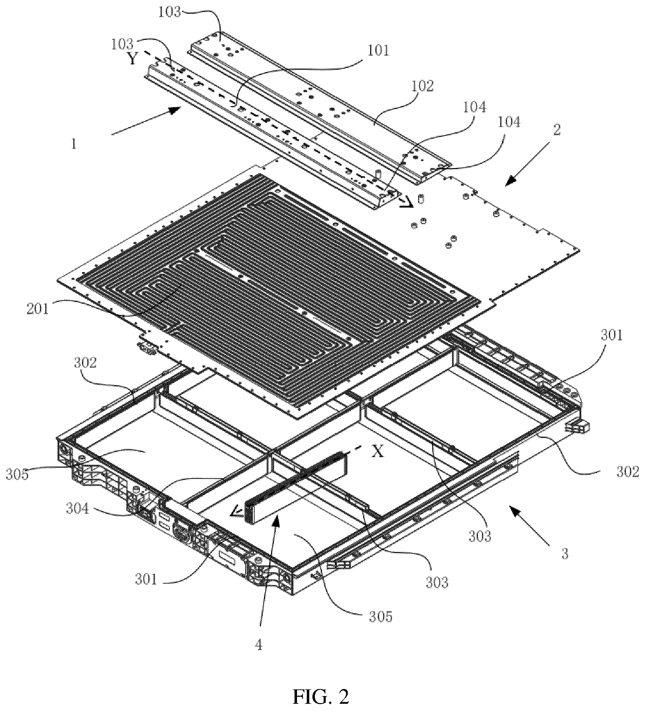

In the embodiment shown in FIG. 1 and FIG. 2, a length of the seat support member 1 extends in a transverse direction (that is, a direction shown by a dashed line Y with an arrow in FIG. 2). However, in practical production, the length of the seat support member 1 can also extend in a longitudinal direction (that is, a direction shown by a dashed line X with an arrow in FIG. 2).

In the embodiment shown in FIG. 1, the battery pack housing includes a battery tray 3 and a cold plate 2. The battery tray 3 has a battery accommodating space 305. The cold plate 2 is configured to perform heat exchange with a battery 4 shown in FIG. 2 through air cooling, liquid cooling, direct cooling, or the like. The cold plate 2 is disposed above the battery tray 3, the seat support member 1 is disposed above the cold plate 2, and the seat support member 1 is connected to the cold plate 2 by using a structural adhesive. For example, materials of vehicle bodies of super cars mostly are composite materials such as carbon fiber, which are not suitable for welding. Therefore, the seat support member 1 does not need to be welded to the vehicle body after being adhered to the cold plate 2. In addition, when lateral collision occurs, a part of collision force can be dispersed by using the cold plate 2 and the seat support member 1, to improve strength of the battery pack 10 for withstanding collision, thereby reducing intrusion into the battery 4 during collision and ensuring safety of the battery pack 10.

The length of the seat support member 1 extends in the transverse direction. This is more conducive to improving strength of the battery pack 10 for withstanding the lateral collision. The lateral collision is more likely to cause damage to the battery pack 10. Therefore, transverse extension of the length of the seat support member 1 is more advantageous.

Refer to FIG. 1. The battery tray 3 includes paired transverse beams 301 and paired longitudinal beams 302. The transverse beams 301 are fixedly connected to the longitudinal beams 302 to form a square-shaped framework. In the embodiment of FIG. 1, the seat support member 1 includes a first seat support member 101 and a second seat support member 102. In practical design, only one seat support member 1 can be used or more seat support members 1 can be used. Each of the first seat support member 101 and the second seat support member 102 has a first end 103 and a second end 104. Both the first end 103 and the second end 104 are fixedly connected to the longitudinal beams 302 of the battery tray 3 by using second connection members 105. In a practical production process, the first end 103 and the second end 104 can alternatively be fixedly connected to the longitudinal beams 302 of the battery tray 3 through welding, riveting, or the like. An advantage of such a structure is that the seat support member 1 is directly connected to the longitudinal beams 302 of the battery tray 3, so that a lateral collision force born by the longitudinal beams 302 can be directly transferred to the seat support member 1 when the lateral collision occurs. In this way, the seat support member 1 can improve structural strength of the battery pack 10 while supporting a seat of the vehicle, thereby improving strength of the battery pack 10 for withstanding the lateral collision, and protecting the battery 4 shown in FIG. 2.

The battery tray 3 further includes a transverse tray beam 303 disposed between the paired longitudinal beams 302. The transverse tray beam 303 improves structural strength of the battery tray 3 while dividing the battery tray 3 into a plurality of battery accommodating spaces 305. At a position between the first end 103 and the second end 104 of the first seat support member 101, a first connection member 106 is fastened to the transverse tray beam 303 after passing through the first seat support member 101 and the cold plate 2, to form a mounting structure shown in FIG. 3. An advantage of such a structure is that because the transverse tray beam 303 is connected to the first seat support member 101, once deformation occurs due to the lateral collision, at the position between the first end 103 and the second end 104, the transverse tray beam 303 and the first seat support member 101 together can always resistant the lateral collision force, thereby reducing intrusion into the battery 4 shown in FIG. 2. The first connection member 106 and the second connection member 105 each can be a bolt, a rivet, or the like.

Refer to FIG. 1 and FIG. 3. A cooling medium channel region 201 is disposed on the cold plate 2. A cooling medium channel 202 is arranged in the cooling medium channel region. A cooling medium such as air, cooling liquid, or a coolant can flow in the cooling medium channel 202 to perform heat exchange with the battery 4 shown in FIG. 2. It can be seen from FIG. 3 that areas of the cooling medium channel region 201 located on two sides of the first seat support member 101 (that is, two sides of the first seat support member 1 in the longitudinal direction) are equal after the first seat support member 101 is mounted. Because the first connection member 106 needs to pass through the cold plate, the cooling medium channel 202 needs to avoid a passing region, which affects a layout of the cooling medium channel 202. The areas of the cooling medium channel region 201 on the two sides of the first seat support member 101 are equal with the first seat support member 101 as a boundary. Therefore, the first seat support member 101 can reduce an impact on heat dissipation performance of the battery 4 in FIG. 2, thereby improving structural strength of the battery pack 10 and ensuring a balanced temperature of the battery 4.

In this embodiment, two beams, that is, the first seat support member 101 and the second seat support member 102, are used. The first end 103 and the second end 104 of the first seat support member 101 are fixedly connected to the longitudinal beams 302, and at the position between the first end 103 and the second end 104 of the first seat support member 101, the first connection member 106 is fastened to the transverse tray beam 303 after passing through the first seat support member 101 and the cold plate 2. Only the first end 103 and the second end 104 of the second seat support member 102 are fixedly connected to the longitudinal beams 302 and the second seat support member 102 is not connected to the transverse tray beam 303. An advantage of such a structure is that the first seat support member 101 mainly improves resistance of the battery pack 10 to the lateral collision force, and the second seat support member 102 assists in improving resistance of the battery pack 10 to the lateral collision force. Both the seat support members can start to resistant the lateral collision force when the lateral collision starts. In addition, because only the first seat support member 101 is connected to the transverse tray beam 303, a region required by a connection member to pass through the cold plate can be reduced as much as possible, thereby reducing an adverse impact on a heat exchange area of the cooling medium channel region 201.

Refer to FIG. 3, a through hole is disposed on the cold plate 2. A bushing 203 is inserted through the through hole. The first connection member 106 is fastened to the transverse tray beam 303 after passing through the bushing 203. The bushing 203 can improve tear resistance of the cold plate at a connection position of a connection member.

An upper end surface 204 of the bushing 203 is higher than an upper surface of the cooling medium channel 202 of the cold plate 2. In this way, the bushing 203 can protect the cooling medium channel 202 from being compressed, deformed, or worn by the first seat support member 101.

Refer to FIG. 1. The battery tray 3 further includes a longitudinal tray beam 304 disposed between the paired transverse beams 301. The longitudinal tray beam 304 intersects with the transverse tray beam 303, to divide the battery tray 3 into a plurality of battery accommodating spaces 305. The longitudinal tray beam 304 can improve structural strength of the battery tray 3. If the first connection member 106, after passing through the first seat support member 101 and the cold plate 2, is fastened to a position at which the longitudinal tray beam 304 intersects with the transverse tray beam 303, the first connection member 106 can still be considered as being fastened to the transverse tray beam 303.

Refer to FIG. 2 and FIG. 4. The battery pack 10 of this embodiment includes the foregoing seat support member mounting structure and the battery 4. The battery 4 is accommodated in the battery pack housing. The battery 4 is accommodated in the battery accommodating space 305 of the battery tray 3. In practical production, the battery 4 can alternatively be accommodated in the battery pack housing in another form, for example, there is only one battery accommodating space 305 on the battery tray 3 or the battery tray 3 is not covered by the cold plate 2. In this way, the seat support member 1 becomes a part of the entire battery pack 10 without being welded to the vehicle body, and is particularly beneficial for the vehicle body using a composite material. In addition, the seat support member 1 can also improve structural strength of the battery pack 10.

A length direction of the battery 4 (that is, the direction shown by the dashed line X with an arrow in FIG. 2) is perpendicular to an extension direction of the first seat support member 101 (that is, the direction shown by the dashed line Y with an arrow in FIG. 2). An advantage of such a structure is that the battery 4 can improve strength of the battery pack 10 in an X direction (the longitudinal direction), and the first seat support member 101 can improve strength of the battery pack 10 in a Y direction (the transverse direction), thereby improving overall strength of the battery pack 10. In FIG. 2, the length direction of the battery 4 is the longitudinal direction, and the extension direction of the first seat support member 1 is the transverse direction. In practical production, the length direction of the battery 4 can alternatively be the transverse direction, and the extension direction of the first seat support member 1 can alternatively be the longitudinal direction, provided that the two directions are perpendicular to each other. Extension of the first seat support member 101 in the transverse direction can improve resistance of the battery pack 10 to the lateral collision.

The battery pack 10 shown in FIG. 4 is formed after the seat support member 1, the cold plate 2, the battery tray 3, and the battery 4 are assembled together.

According to another aspect of this application, a vehicle 100 is further provided. The vehicle 100 uses the foregoing seat support member mounting structure or the foregoing battery pack 10. Therefore, a vehicle body of the vehicle 100 does not need to be welded to the seat support member 1.

The seat support member mounting structure or battery pack 10 in this application is particularly suitable for the vehicle body of the vehicle 100 that is manufactured by using a composite material that is not suitable for a welding process. This is because the seat support member 1 is directly adhered to the battery pack housing in this case, so that structural strength of the battery pack 10 can be further improved.

In the description of this application, it should be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, is an orientation or positional relationship shown based on the accompanying drawings, and is only for ease of describing this application and simplifying the descriptions, rather than indicating or implying that the apparatus or element referred to must have a specific orientation or be constructed and operated in a specific orientation, and therefore should not be understood as a limitation on this application.

In addition, terms "first" and "second" are merely used for description purposes, and should not be understood as indicating or implying relative importance or implicitly indicating a quantity of technical features indicated. Therefore, a feature defined by "first" or "second" may explicitly or implicitly include one or more such features. In the descriptions of this application, "a plurality of" means two or more, unless otherwise explicitly defined.

In this application, unless otherwise explicitly specified and defined, terms such as "mount", "interconnect", "connect", and "fix" should be understood in a broad sense, for example, may be understood as a fixed connection, a detachable connection, or an integrated connection, may be understood as a mechanical connection, or an electrical connection, or may be understood as a direct connection or an indirect connection through an intermediate medium, or may be understood as internal communication between two elements or an interaction relationship between two elements. A person of ordinary skill in the art may understand specific meanings of the foregoing terms in this application based on specific situations.

In this application, unless otherwise explicitly specified and defined, that the first feature is "above" or "below" the second feature may be that the first feature and the second feature are in direct contact, or the first feature and the second feature are in indirect contact through an intermediate medium. In addition, that the first feature is "above", "over", or "on top of" the second feature may be that the first feature is directly above or obliquely above the second feature, or merely indicates that a level height of the first feature is higher than that of the second feature. That the first feature is "below", "under", or "beneath" the second feature may be that the first feature is directly below or obliquely below the second feature, or merely indicates that a level height of the first feature is lower than that of the second feature.

In the description of this specification, descriptions referring to the terms "one embodiment", "some embodiments", "examples", "specific examples" or "some examples" mean that specific features, structures, materials, or characteristics described with reference to this embodiment or example are included in at least one embodiment or example of this application. In this specification, schematic expression of the above terms does not necessarily specific to the same embodiment or example. Moreover, the described specific features, structures, materials, or characteristics can be combined in any one or more embodiments or examples appropriately. In addition, a person skilled in the art can integrate or combine different embodiments or examples and characteristics of different embodiments or examples described in this specification, provided that they do not conflict with each other.

Although the embodiments of this application have already been illustrated and described above, it may be understood that the embodiments are examples but cannot be understood as a limitation on this application. A person of ordinary skill in the art can make changes, modifications, replacements, or variations to the embodiments within the scope of this application.

## Claims

1. A seat support member mounting structure (1000), comprising:
a seat support member (1); and
a battery pack housing (20), wherein
the seat support member (1) is connected to the battery pack housing (20) by using a structural adhesive.

2. The seat support member mounting structure (1000) according to claim 1, wherein the battery pack housing (20) comprises a battery tray (3) and a cold plate (2), the battery tray (3) has a battery accommodating space (305), the cold plate (2) is disposed above the battery tray (3), the seat support member (1) is disposed above the cold plate (2), and the seat support member (1) is connected to the cold plate (2) by using a structural adhesive.

3. The seat support member mounting structure (1000) according to claim 2, wherein a length of the seat support member (1) extends in a transverse direction.

4. The seat support member mounting structure (1000) according to claim 3, wherein the battery tray (3) comprises paired transverse beams (301) and paired longitudinal beams (302), the transverse beams (301) and the longitudinal beams (302) are fixedly connected to form a square-shaped framework, and two ends of the seat support member (1) are fixedly connected to the longitudinal beams (302).

5. The seat support member mounting structure (1000) according to claim 4, wherein the battery tray (3) further comprises a transverse tray beam (303) disposed between the paired longitudinal beams (302), and at a position between the two ends of the seat support member (1), a first connection member (106) is fastened to the transverse tray beam (303) after passing through the seat support member (1) and the cold plate (2).

6. The seat support member mounting structure (1000) according to claim 5, wherein a cooling medium channel region (201) is disposed on the cold plate (2), and areas of the cooling medium channel region (201) located on two sides of the seat support member (1) are equal.

7. The seat support member mounting structure (1000) according to claim 4, wherein the seat support member (1) comprises a first seat support member (101) and a second seat support member (102), two ends of the first seat support member (101) are fixedly connected to the longitudinal beams (302) and at a position between the two ends of the first seat support member (101), a first connection member (106) is fastened to the transverse tray beam (303) after passing through the first seat support member (101) and the cold plate (2), and two ends of the second seat support member (102) are fixedly connected to the longitudinal beams (302) and the second seat support member (102) is not connected to the transverse tray beam (303).

8. The seat support member mounting structure (1000) according to any one of claims 4 to 7, wherein a through hole is disposed on the cold plate (2), a bushing (203) is inserted through the through hole, and the first connection member (106) passes through the bushing (203).

9. The seat support member mounting structure (1000) according to claim 8, wherein an upper end surface (204) of the bushing (203) is higher than an upper surface of a cooling medium channel (202) of the cold plate (2).

10. The seat support member mounting structure (1000) according to claim 3, wherein the battery tray (3) further comprises a longitudinal tray beam (304) disposed between the paired transverse beams (301), and the longitudinal tray beam (304) intersects with the transverse tray beam (303), to divide the battery tray (3) into a plurality of battery accommodating spaces (305).

11. A battery pack (10), comprising:
the seat support member mounting structure (1000) according to any one of claims 1 to 10; and
a battery (4), wherein the battery (4) is accommodated in the battery pack housing (20).

12. The battery pack (10) according to claim 11, wherein a length direction of the battery (10) is perpendicular to an extension direction of the seat support member (1).

13. A vehicle (100), wherein the vehicle (100) uses the seat support member mounting structure (1000) according to any one of claims 1 to 10 or the vehicle (100) uses the battery pack (10) according to claim 11 or 12.

14. The vehicle according to claim 13, wherein a vehicle body of the vehicle (100) is manufactured by using a composite material.
